# EUROPEAN PATENT APPLICATION

(11) **EP 4 776 451 A1**
(43) Date of publication of application: **15.07.2026**
(21) Application number: 24861403.4
(22) Date of filing: 03.09.2024
(51) Int. Cl.: H02G 3/04, H02G 3/06, H02G 3/30, G02B 6/46

(54) **SET OF TRAYS OBTAINED BY MODULAR CONNECTIONS FOR STRUCTURED FIBRE OPTIC CABLING**

(30) Priority: 04.09.2023 BR 102023017925
(71) Applicant: M.Way Indústria de Infraestrutura Ltda, Aguaí 13860-000 (BR)
(72) Inventor: DIAFÉRIA, Flávio, 09771210 - SÃO BERNARDO DO CAMPO -SP (BR)
(74) Representative: Cabinet Chaillot
(86) International application number: PCT/BR2024/050394
(87) International publication number: WO 2025/050191

(57) **Abstract**

Trays (10) for structured fiber optic cabling of the type installed in data centers, telecommunications rooms, wiring cabinets, among other similar environments; Said set of trays (10) comprises a 90° Curved Tray (LC1), a Cross Tray (LC2), a T-shaped Tray (LC3), a Longitudinal Tray (LC4), Splices (EM1), and a Drip Tray with Cover (PG1); Said trays (LC1), (LC2), (LC3), and (LC4) can be expandable because they consist of at least one side profile (11) and/or a central profile (12) and/or a curved profile (13) connected to each other by corresponding coupling members (11A)/(12A)/(13A) and (11B)/(12B)/(13B) provided at the edges of said profiles, as well as by the connection of corresponding peripheral connectors (20)/(30), connector (40) for coupling to the central profiles (12) and central connector (50).

## Description

### TECHNICAL FIELD OF THE INVENTION

This patent for invention relates to a set of trays obtained by modular connections for structured fiber optic cabling of the type installed in Data Centers, telecommunications rooms, wiring cabinets, among other similar environments. The modular connections are mounted on central, lateral, and curved profiles, each provided with corresponding couplings that configure expandable trays such as: (i) a 90° Curved Tray; (ii) a Cross Tray; (iii) a T-shaped Tray; (iv) Splices; (v) a Drip Tray with Cover. The dimensions of these trays can be adapted to the installation surface according to the usable area for the distribution, protection, and segregation of fiber optic cables, thus meeting the needs of a wide variety of projects.

### INVENTION BACKGROUND

As is widely known, the applicant, who is active in the field of product development for electrical cabling and data transmission infrastructure, has filed several documents, including document No. BR 102020005429-5, which describes a set of modular trays for structured fiber optic cabling that can be expanded because they are formed by at least one central profile with pairs of longitudinal connections for coupling to end profiles, each with corresponding base connections.

Similarly, the aforementioned document describes conventional types of trays for accommodating structured fiber optic cabling, which are generally formed in a single piece with a U-shaped cross-section and made of polymers such as Acrylonitrile butadiene styrene (ABS) - and Polyvinyl chloride (PVC) - or metals such as Aluminum Alloys, in addition to other materials.

The main drawback of these conventional trays is that the single-piece configuration does not provide the possibility of expansion or adjustments according to the needs of the structured cabling project and, hence, in the event of network expansion, it is necessary to replace the entire line of trays, thus making conventional trays inefficient and costly.

In a search of specialized databases, documents were found referring to modular tray models as presented in document No. US2004124321, which is related to a telecommunications cable management system that includes a flat base element, including a flat top surface and side edges. The side elements are assembled with ab arrangement corresponding to the base element. The side elements may include one or more of the following items: standing wall portions, side outlets that extend horizontally, and gutters. The base elements and upper wall portions may have a continuous cross-section and may be cut to the desired length for the cable management system. The outlet sides may also include multiple components in which a central section of each may be cut to the desired width.

Document No. US2007092196 is related to a telecommunications cable management system that includes tray elements, including a flat top surface and sides for routing and managing cables. The channel elements are made of separate parts assembled together with a coupling arrangement. The coupling arrangement allows the system to be assembled on site, such as by fitting the parts together. The channel elements are then joined together to form the cable management system.

Although the above-mentioned documents disclose modular trays, the expansion or angle change modulations achieved are minimal when compared to the modularity presented in document No. BR 102020005429-5, which discloses a set of modular trays for structured fiber optic cabling.

The current application brings new and improved technical effects in the configuration of trays obtained by modular connections, expanding the versatility for the expansion and adaptation of the trays according to the project.

### OBJECTIVES OF THE INVENTION

The objective of the invention is to present a set of trays obtained by assembling modular connections in structural profiles to accommodate structured fiber optic cabling of the type installed in Data Centers, telecommunications rooms, wiring cabinets, among other similar environments, said modular connections being provided with corresponding couplings and, when connected to the structural profiles, configuring various trays such as said such as 90° Curved Tray, Cross Tray, T-Tray, Splice, Drip Tray with Cover, all of which can be expanded according to the design for the distribution, protection, and segregation of the intended fiber optic cables.

Another objective of the invention patent is to present a set of trays obtained by modular connections for structured fiber optic cabling whose simplified characteristics facilitate assembly and, consequently, installation, meeting the needs of different layouts.

It is also an objective of the invention patent to present a set of trays obtained by assembly between modular connections in structural profiles whose expansion or reduction adjustment allows the customization of the cabling infrastructure even after the tray lines have been assembled, enabling cost reduction with the adaptation of the optical cabling infrastructure if necessary.

### DESCRIPTION OF THE FIGURES

To supplement this description in order to obtain a better understanding of the characteristics of the present invention and in accordance with a preferred practical implementation thereof, the description is accompanied by a set of drawings, in which, by way of example, although not limited thereto, its operation is represented:

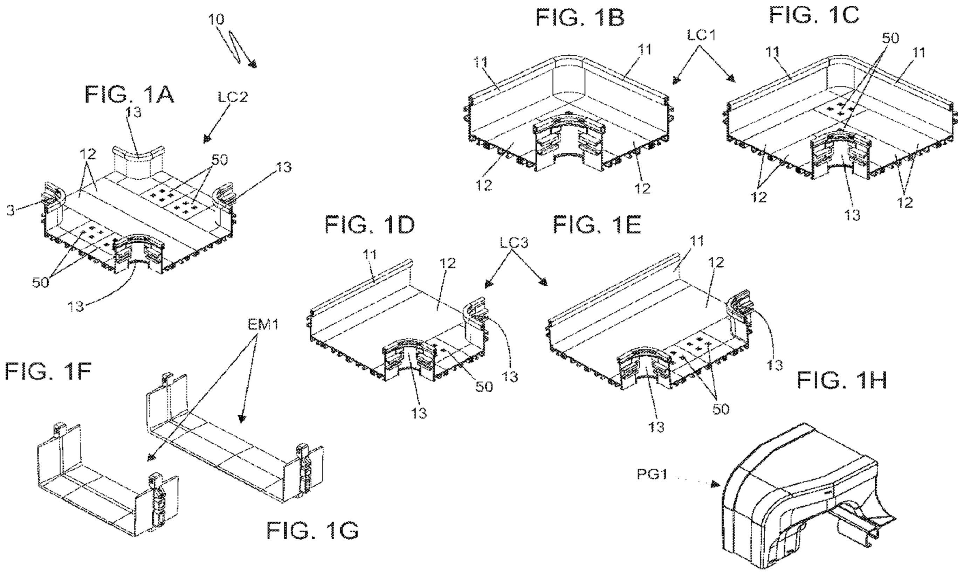

Figures 1A, 1B, 1C, 1D, 1E, 1F, 1G, and 1H show perspective views of the set of trays obtained by modular connections for structured fiber optic cabling, with Figure 1A representing a perspective view of the Cross Tray; Figures 1B and 1C show perspective views of the 90° Curved Tray illustrating different dimensions due to expansion; Figures 1D and 1E show perspective views of the T-shaped Tray illustrating different dimensions due to expansion; Figures 1F and 1G reveal perspective views of the Splice Tray illustrating different dimensions by expansion, and Figure 1H shows a perspective view of the Drip Tray with cover;
Figures 2A and 2B show perspective and frontal views of the Cross Tray;
Figure 2C shows an exploded perspective view of the modular connections that make up the Cross Tray and that are provided in the other trays described;
Figures 2D and 2E show exploded and assembled front views and enlarged details of the coupling members provided in the side and central profiles of the trays;
Figure 2F shows an enlarged detail 'A' illustrating the central, curved, and side profiles, as well as their respective connectors;
Figure 2G shows an enlarged perspective view of the central and peripheral connectors;
Figure 2H shows an enlarged perspective view of the peripheral connectors exploded in relation to the curved and side profiles;
Figures 2I and 2J show exploded and assembled longitudinal section views of the peripheral connectors;

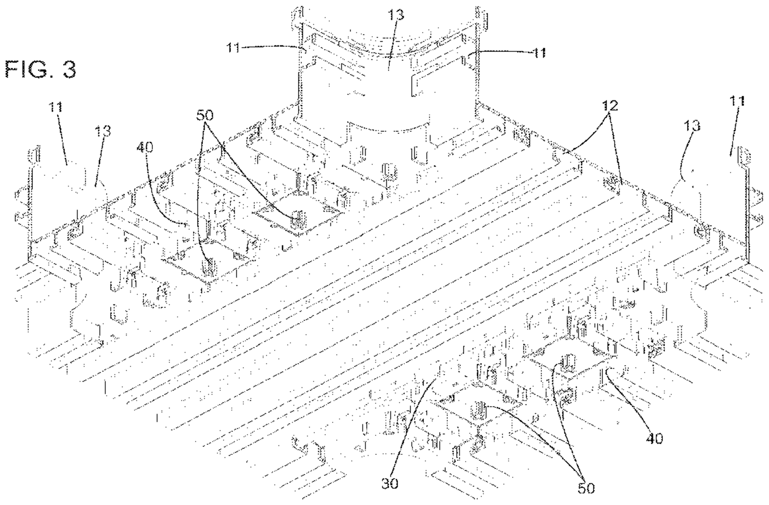

Figure 3 shows a bottom perspective view of the Cross Tray;

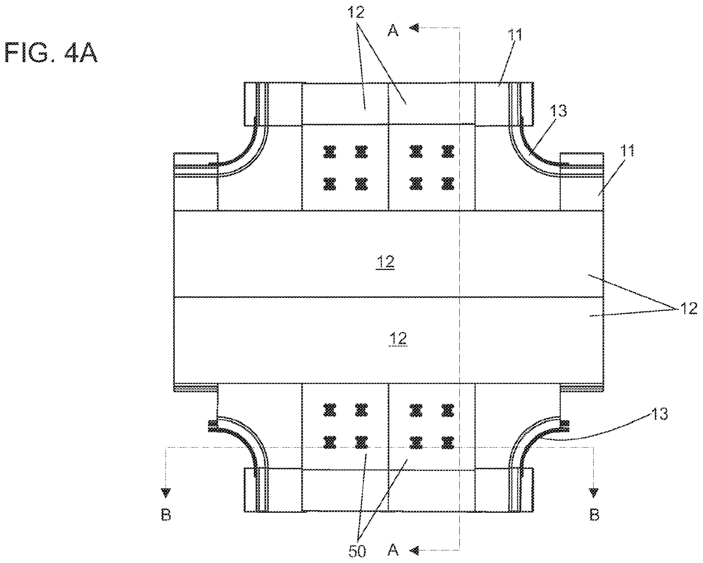

Figure 4A shows a top view of the Cross Tray with cut indications;

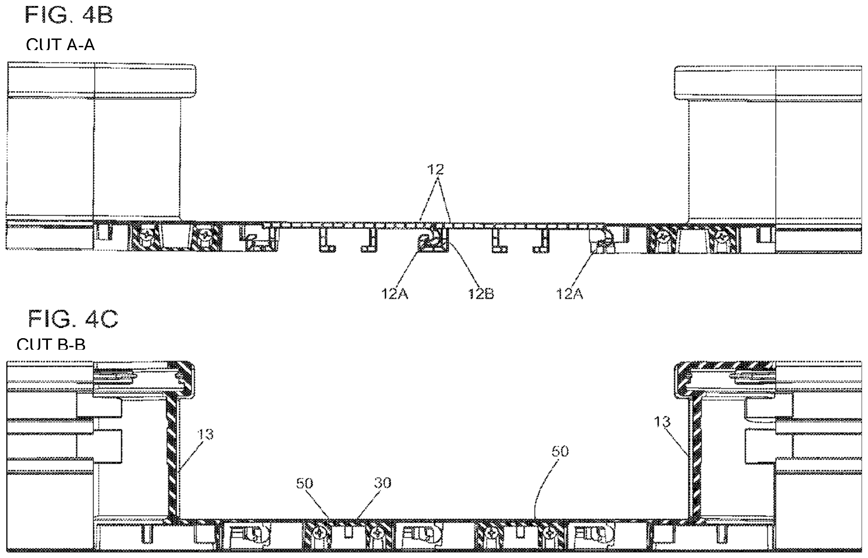

Figures 4C and 4B illustrate cross-sectional views A.A and longitudinal views B.B indicated in Figure above;

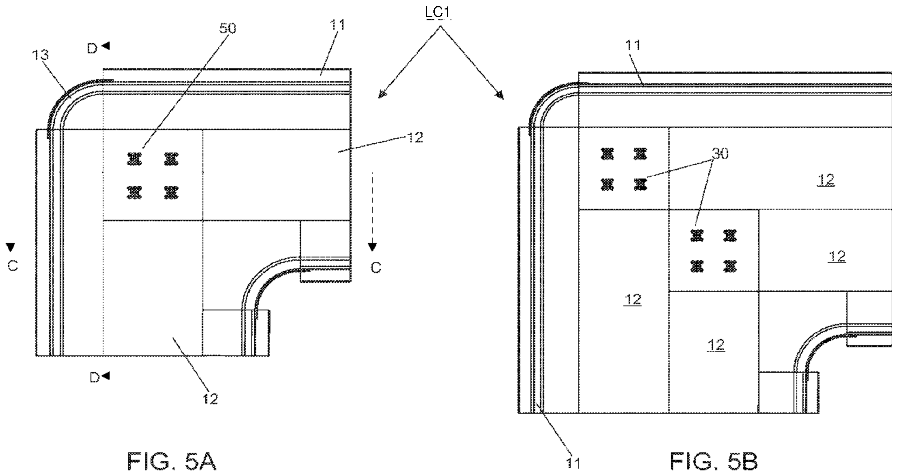

Figures 5A and 5B show top views of the 90° Curved Tray illustrating the dimensional expansion by the addition of central profiles and connectors;

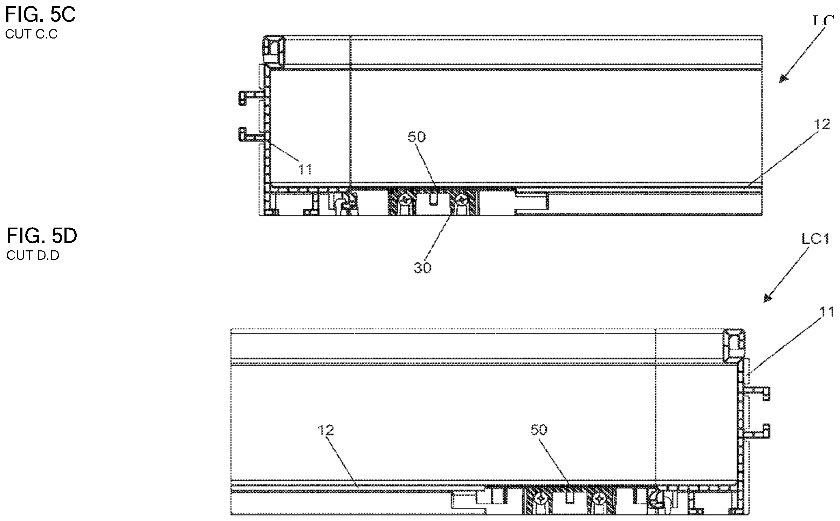

Figures 5C and 5D show cross-sectional views C.C and longitudinal views D.D indicated in Figure 5A;

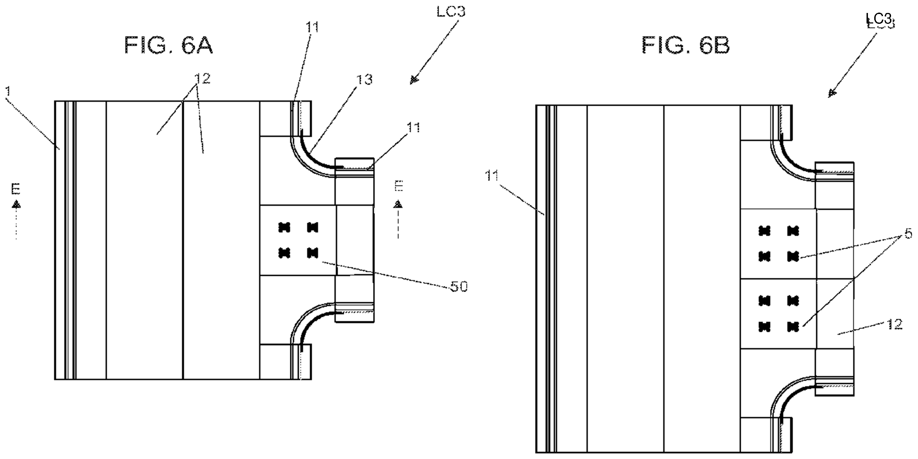

Figures 6A and 6B show top views of the T-shaped tray illustrating the dimensional expansion through the addition of central profiles and connectors;

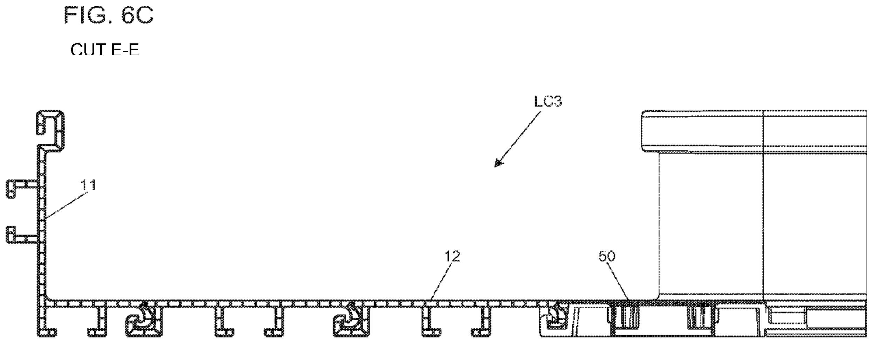

Figure 6C shows the cross-sectional view E.E indicated in Figure 6A;

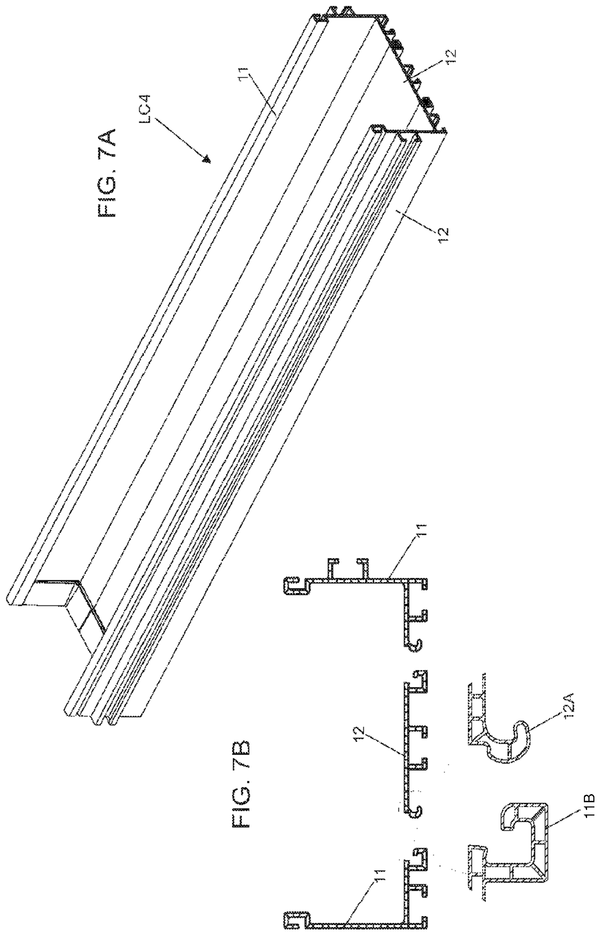

Figures 7A and 7B show perspective and exploded front views of the profiles that make up the longitudinal tray with respective exploded details of the couplings;

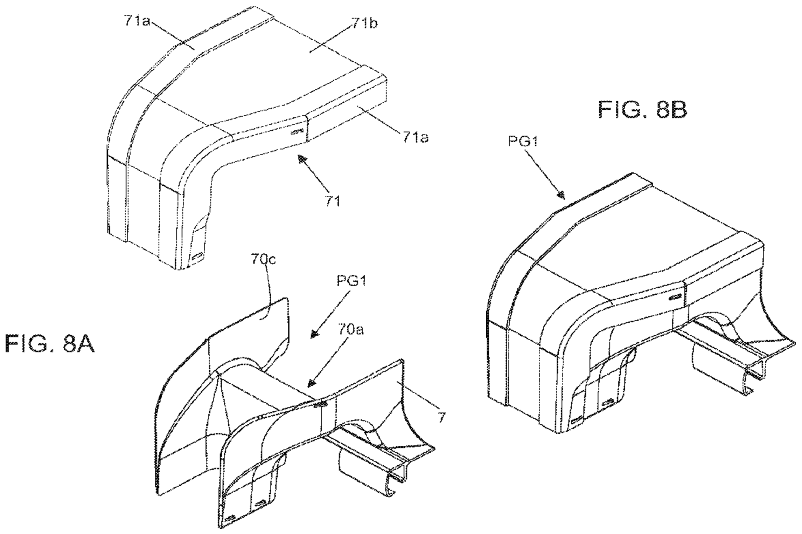

Figure 8A shows an exploded perspective view of the cover and base of the drip tray;
Figure 8B shows an assembled perspective view of the Drip Tray;
Figures 9A and 9B show bottom perspective views of the exploded and assembled; and

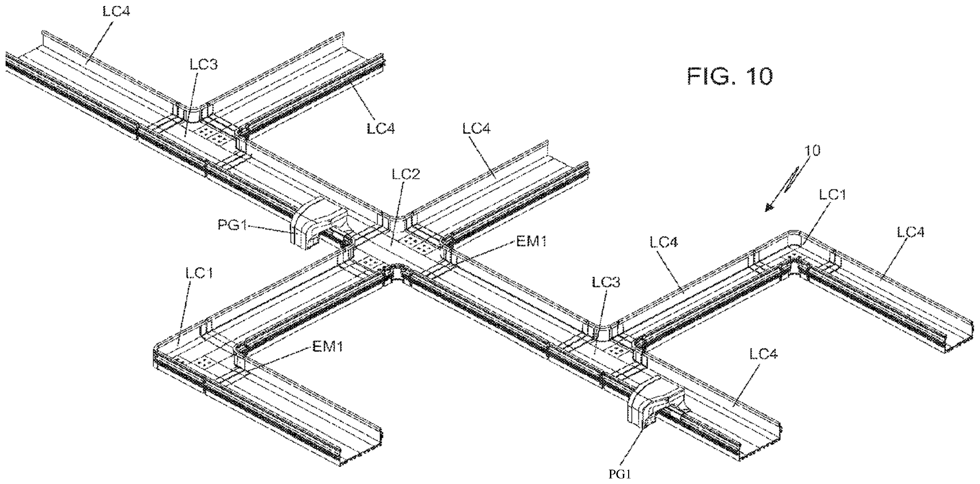

Figure 10 represents an exemplary view of a structural arrangement obtained by assembling the aforementioned trays.

### DESCRIPTION OF THE INVENTION

This patent refers to the "SET OF TRAYS OBTAINED BY MODULAR CONNECTIONS FOR STRUCTURED FIBER OPTIC CABLING," trays (10) for structured fiber optic cabling of the type installed in Data Centers, telecommunications rooms, wiring cabinets, among other similar environments. This set of trays (10) comprises a 90° Curved Tray (LC1), a Cross Tray (LC2), a T-Tray (LC3), a Longitudinal Tray (LC4), Splices (EM1), a Drip Tray with Cover (PG1), all made of polymers such as Acrylonitrile butadiene styrene (ABS) and Polyvinyl chloride (PVC) or metals such as Aluminum Alloys, in addition to other flame-retardant materials.

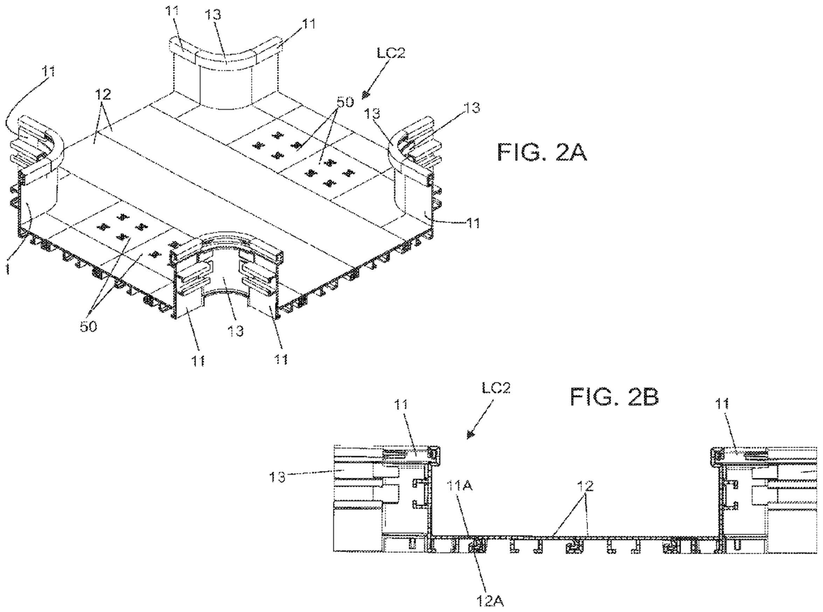

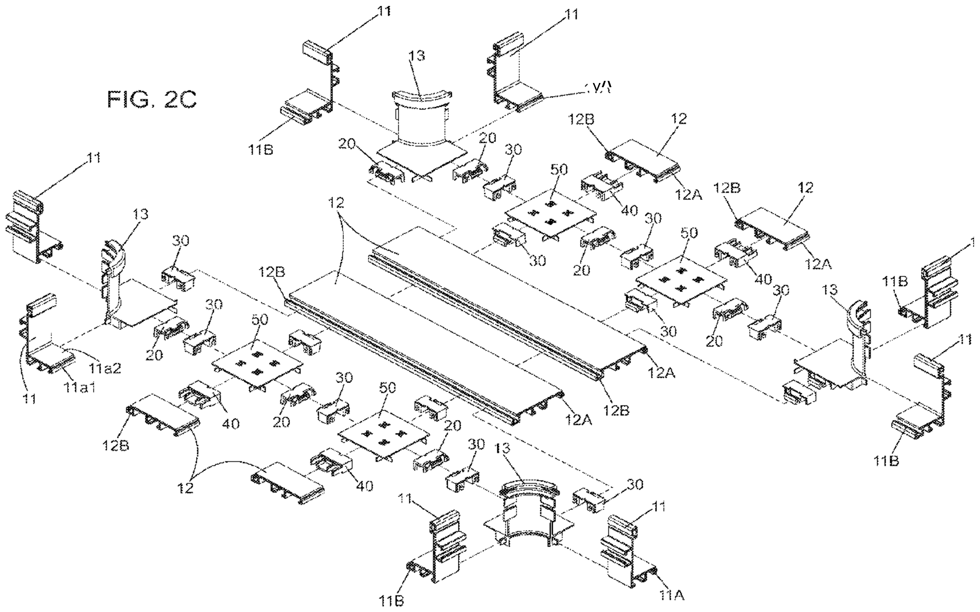

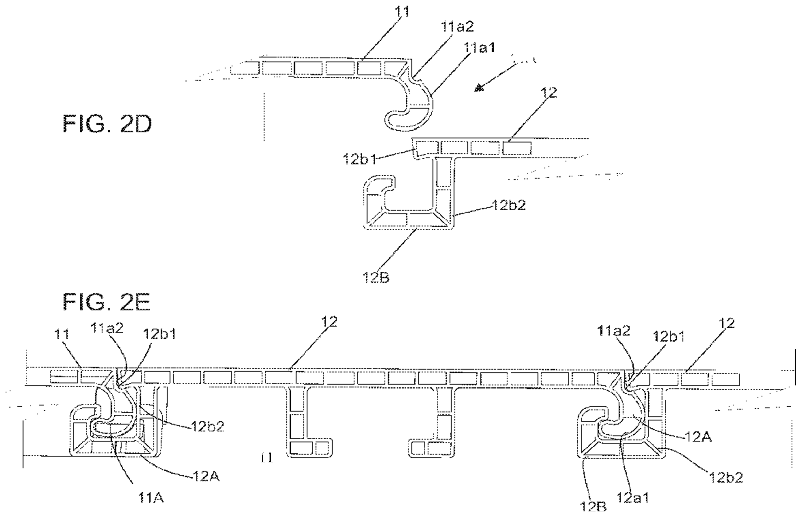

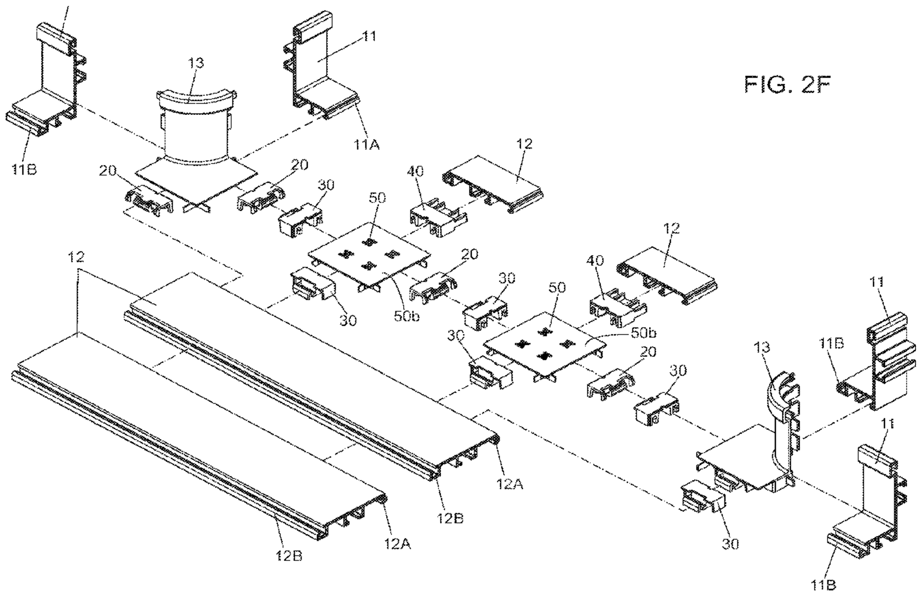

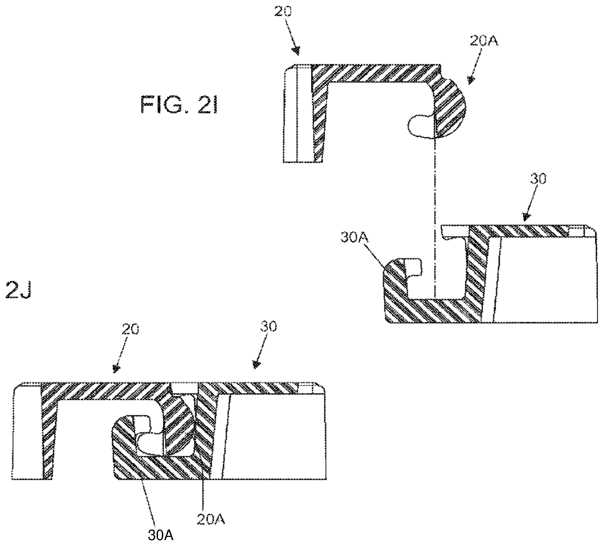

According to the present invention, said trays (LC1), (LC2), (LC3), and (LC4) are expandable because they are formed by at least one side profile (11) and/or a central profile (12) and/or a curved profile (13) connected to each other by corresponding coupling members (11A)/(12A)/(13A) and (11B)/(12B)/(13B) (see Figures 2C, 2D, and 2E) provided at the edges of said profiles, as well as by the assembly of corresponding peripheral connectors (20)/(30), connector (40) for mounting on the central profiles (12) and central connector (50), the connectors (20)/(30) also being provided with coupling members (20A) and (30A). The corresponding coupling members (11A)/(12A) and (11B)/(12B) of the side (11) and central (12) profiles for longitudinal connection (see Figure 2C) comprise members (11A)/(12A) formed by a mirrored 'C' projection (11a1)/(12a1) provided with an arched end recess (11a2)/(12a2) made in the edge designed to accommodate the projecting oblique edge (11b1)/(12b1) of the corresponding member (11B)/(12B) which, in turn, comprises an 'L' projection (11b2) or (12b2) forming an opening capable of receiving the mirrored 'C' projection (11a1) or (12a1).

Said corresponding peripheral connectors (20) and (30), also provided with coupling members (20A) and (30A), make the connection between the central profile(s) (12) and curved profile(s) (13), as well as with the central connector (50), wherein said peripheral connector (20) provides a coupling member (20A) comprising a mirrored 'J' projection capable of coupling into an area formed by an inverted 'J' projection of the coupling member (30A) of the corresponding connector (30).

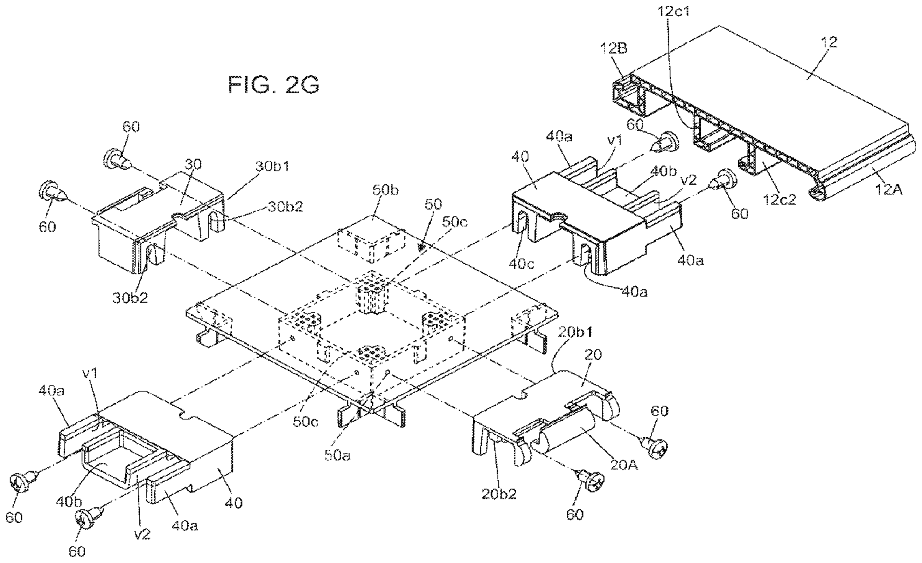

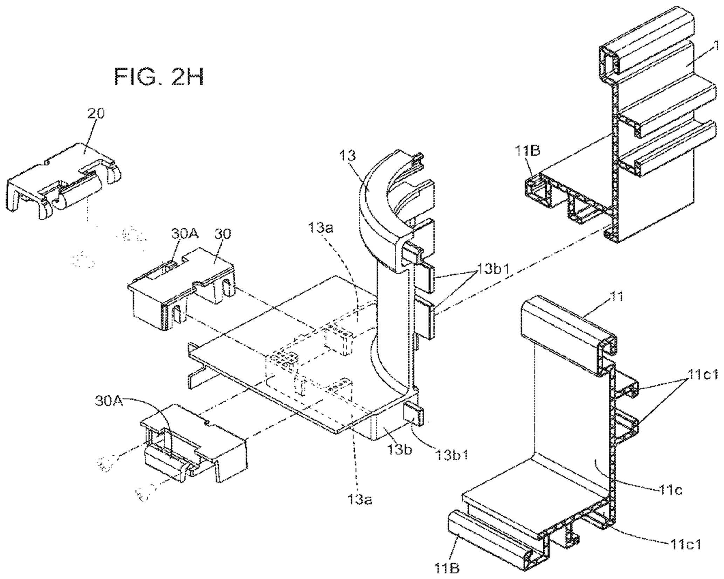

Both connectors (20) and (30) have, on one of the flat walls (20b1) and (30b1) (see Figure 2G), a pair of oblong cuts (20b2) and (30b2) for mounting fastening screws (60) installed in holes in structural walls (50a) of the central connector (50) and structural walls (13a) of the curved profile (13), which in turn has projections (13b1) on the side walls (13b) for coupling into 'L'-shaped recesses (11c1) provided in the wall (11C) of each profile (11) (see Figure 2H).

The connector (40) for mounting on the central profiles (12) provides a pair of end extensions (40a) (see figure 2G) separated by a central 'U'-shaped projection (40b), forming gaps (v1) and (v2) that can receive projecting walls at 'L' (12c1) and (12c2) of the central profiles (12). On the wall opposite the gaps (v1) and (v2), there are oblong cuts (40c) for mounting fastening screws (60) for mounting on the central connector (50).

The central connector (50) comprises a quadrangular plate (50b) from whose lower face orthogonal walls (50a) extend, in which holes are made for mounting the screws (60) and fixing the connectors (20), (30) and (40), with bracing walls (50c) aligned with the holes.

The composition of the tray assembly (10), consisting of a 90° Curved Tray (LC1), a Cross Tray (LC2), a T-shaped Tray (LC3), and a Longitudinal Tray (LC4), is obtained by assembling the profiles (11) and/or a central profile (12) and/or a curved profile (13) connected to each other by corresponding coupling members (11A)/(12A)/(13A) and (11B)/(12B)/(13B) and connected by the corresponding peripheral connectors (20)/(30), connector (40) and central connector (50).

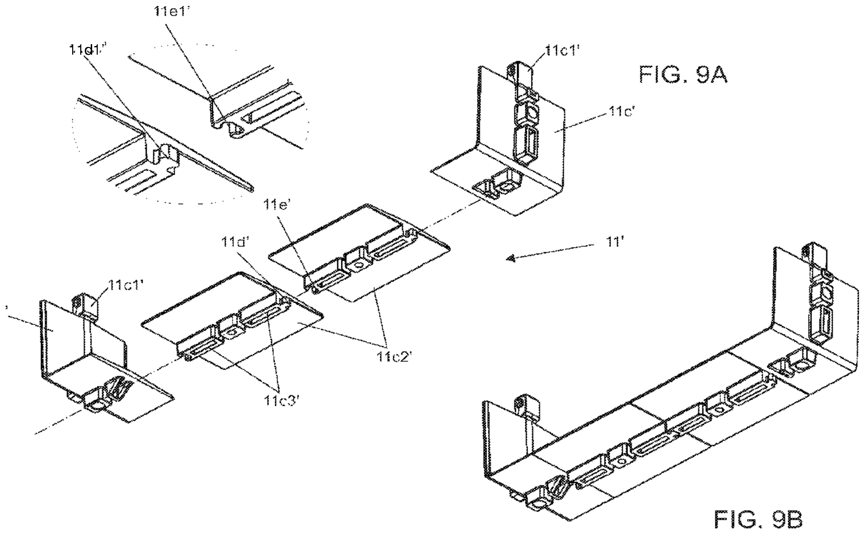

Said splice (EM1) (see Figures 1, 9A, and 9B) comprises lateral profiles (11') provided on the outer face of the orthogonal wall (11c') projections (11c1') that comprise interconnection elements with other lateral profiles (11'), as well as, on the lower face of the base (11c2'), other projections (11c3') are provided with engagement members (11d') and (11e') corresponding to the protruding tooth (11d1') and the recess (11e1') of a shape corresponding to the tooth (11d1').

Completing the trays (10), the drip tray (PG1) is formed by a 'Y'-shaped body (70) configured by an enlarged opening (70a) that projects into a narrow channel (70b) with side walls (70c) for mounting a cover (71) comprising end frames (71a) that receive a central plate (71b).

It is certain that when the present invention is put into practice, modifications may be introduced with regard to certain details of construction and form, without this implying a departure from the fundamental principles that are clearly substantiated in the claims, it being understood that the terminology used was not intended to be limiting.

## Claims

1. **"SET OF TRAYS OBTAINED BY MODULAR CONNECTIONS FOR STRUCTURED FIBER OPTIC CABLING,"** trays (10) for structured fiber optic cabling of the type installed in Data Centers, telecommunications rooms, wiring cabinets, among other similar environments; said set of trays (10) comprises a 90° Curved Tray (LC1), a Cross Tray (LC2), a T-shaped Tray (LC3), a Longitudinal Tray (LC4), Splices (EM1), a Drip Tray with Cover (PG1), all made of polymers such as Acrylonitrile butadiene styrene - ABS - and Polyvinyl chloride - PVC - or metals such as Aluminum Alloys, in addition to other flame-retardant materials; ***characterized* by** trays (LC1), (LC2), (LC3), and (LC4) being expandable because they consist of at least one side profile (11) and/or a central profile (12) and/or a curved profile (13) connected to each other by corresponding coupling members (11A)/(12A)/(13A) and (11B)/(12B)/(13B) provided on the edges of said profiles, as well as by the connection of corresponding peripheral connectors (20)/(30), connector (40) for coupling in the central profiles (12) and central connector (50), the connectors (20)/(30) also being provided with coupling members (20A) and (30A); the corresponding coupling members (11A)/(12A) and (11B)/(12B) of the side (11) and central (12) profiles for longitudinal connection comprise members (11A)/(12A) formed by a mirrored 'C' projection (11a1)/(12a1) provided with an arched end recess (11a2)/(12a2) made in the edge designed to accommodate the projecting oblique edge (11b1)/(12b1) of the corresponding member (11B)/(12B) which, in turn, comprises a 'L' projection (11b2) or (12b2) forming an opening capable of receiving the mirrored 'C' projection (11a1) or (12a1); the corresponding peripheral connectors (20) and (30), also provided with coupling members (20A) and (30A), connect the central profile(s) (12) and curved profile(s) (13), as well as with the central connector (50), wherein said peripheral connector (20) provides a coupling member (20A) comprising a mirrored 'J' projection capable of coupling into an area formed by an inverted 'J' projection of the coupling member (30A) of the corresponding connector (30).

2. **"SET OF TRAYS OBTAINED BY MODULAR CONNECTIONS FOR STRUCTURED FIBER OPTIC CABLING,"** according to claim *1,* ***characterized* in that** both connectors (20) and (30) have, on one of the flat walls (20b1) and (30b1), a pair of oblong cuts (20b2) and (30b2) for receiving fastening screws (60) installed in holes in structural walls (50a) of the central connector (50) and structural walls (13a) of the curved profile (13) which, in turn, has projections (13b1) on the side walls (13b) for coupling into a niche (11c1) in 'L' provided in the wall (11C) of each profile (11).

3. **"SET OF TRAYS OBTAINED BY MODULAR CONNECTIONS FOR STRUCTURED FIBER OPTIC CABLING,"** according to claim *1,* ***characterized* by** connector (40) providing a pair of end extensions (40a) intermediate a central 'U'-shaped projection (40b) forming gaps (v1) and (v2) capable of receiving projecting walls at 'L' (12c1) and (12c2) of the central profiles (12); on the wall opposite the gaps (v1) and (v2) there are oblong cuts (40c) for mounting fastening screws (60) for mounting on the central connector (50).

4. **"SET OF TRAYS OBTAINED BY MODULAR CONNECTIONS FOR STRUCTURED FIBER OPTIC CABLING,"** according to claim *1,* ***characterized* by** a central connector (50) comprising a quadrangular plate (50b) whose lower face has orthogonal walls (50a) with holes for mounting the screws (60) and fastening the connectors (20), (30), and (40), with bracing walls (50c) aligned with the holes.

5. **"SET OF TRAYS OBTAINED BY MODULAR CONNECTIONS FOR STRUCTURED FIBER OPTIC CABLING,"** according to claims 1, 2, 3, and 4, ***characterized* by** the composition, expansion, or reduction of the set of trays (10), wherein the 90° Curved Tray (LC1), Cross Tray (LC2), T-Tray (LC3) and Longitudinal Tray (LC4) being obtained by assembling the profiles (11) and/or a central profile (12) and/or a curved profile (13) connected to each other by corresponding coupling members (11A)/(12A)/(13A) and (11B)/(12B)/(13B) and connected by corresponding peripheral connectors (20)/(30), connector (40) and central connector (50).

6. **"SET OF TRAYS OBTAINED BY MODULAR CONNECTIONS FOR STRUCTURED FIBER OPTIC CABLING,"** according to claim *1,* ***characterized* by** a splice (EM1) that is part of the assembly (10) comprising lateral profiles (11') provided on the outer face of the orthogonal wall (11c') of projections (11c1') that comprise interconnection elements with other side profiles (11'), as well as, on the lower face of the base (11c2'), other projections (11c3') are provided with coupling members (11d') and (11e') formed by a protruding tooth (11d1') and a recess (11e1') with a shape corresponding to the tooth (11d1').

7. **"SET OF TRAYS OBTAINED BY MODULAR CONNECTIONS FOR STRUCTURED FIBER OPTIC CABLING,"** according to claim *1,* ***characterized* by** a drip tray (PG1) that is part of the set (10) and is formed by a 'Y'-shaped body (70) configured by an enlarged opening (70a) that projects into a narrow channel (70b) with side walls (70c) for mounting a cover (71) comprising end frames (71a) that receive a central plate (71b).
